# DEMANDE DE BREVET EUROPEEN

(11) **EP 1 034 993 A1**
(43) Date de publication de la demande: **13.09.2000**
(21) Numéro de dépôt: 00400655.7
(22) Date de dépôt: 09.03.2000
(51) Int. Cl.: B60S 3/04

(54) **Dispositif pour laver la face inférieure du châssis d'un véhicule**

(30) Priorité: 11.03.1999 FR 9903019
(71) Demandeur: Compagnie Generale des Transports Verney, 72000 Le Mans (FR)
(72) Inventeur: Plante, André, 22200 Guimgamp (FR)
(74) Mandataire: Rémont, Claude

(57) **Abrégé**

Le chariot (3) porte deux bras latéraux (12, 13) montés chacun de manière pivotante par rapport au chariot (3) autour d'un axe respectif sensiblement vertical et adaptés chacun à définir une position extrême correspondante de la lance, des moyens (16, 18) pour commander l'écartement des bras (12, 13) jusqu'à leur position déployée respective lors d'un déplacement du chariot (3) dans le sens (14) de projection, et le rapprochement des bras (12, 13) jusqu'à leur position rapprochée en l'absence de projection, des moyens élastiques (33) étant interposés pour permettre un pivotement partiel de chacun des bras (12, 13) vers sa position rapprochée lorsqu'un bras (12, 13) vient en contact avec une roue (15) du véhicule (2) de façon à déplacer de manière correspondante la position extrême concernée.

## Description

La présente invention concerne un dispositif pour laver la face inférieure du châssis d'un véhicule.

On connaît, d'après le EP-A-0 100 680, un dispositif comprenant un chariot adapté à être déplacé sous le véhicule et portant une lance de projection montée à une de ses extrémités sur le chariot de manière pivotante autour d'un axe sensiblement vertical et recevant un liquide sous pression, des moyens pour déplacer le chariot sensiblement dans la direction longitudinale du véhicule, des moyens pour faire pivoter la lance alternativement dans les deux sens entre deux positions extrêmes de façon telle qu'un jet de liquide sous pression balaie sensiblement toute ladite face inférieure dudit châssis.

Selon cet état de la technique, un automate programmable commande les déplacements du chariot, les pivotements de la lance, et l'ensemble des opérations pour obtenir un nettoyage satisfaisant du châssis.

Ce dispositif qui donne satisfaction sur le plan technique, est très onéreux du fait de l'automate programmable dont la présence est nécessaire pour maintenir la lance en bon état de fonctionnement.

En effet, la lance doit avoir une certaine longueur pour pouvoir balayer toute la surface inférieure du véhicule lors de son pivotement. La lance est donc fragile.

Les roues constituent des obstacles inévitables contre lesquels la lance peut venir buter et être détériorée.

Il faut donc prévoir des moyens pour modifier les mouvements de la lance au voisinage des roues d'un véhicule. C'est l'automate qui est programmé pour commander ces mouvements pour un type de véhicule donné.

Le but de la présente invention est de remédier aux inconvénients des dispositifs connus, et de proposer un dispositif du type précité qui soit de structure très simple, fiable et économique, tout en étant capable d'adapter le pivotement de la lance au niveau des roues sans diminuer pour autant la qualité du lavage du châssis.

Suivant la présente invention, le dispositif du type précité est caractérisé en ce que le chariot porte deux bras latéraux montés chacun de manière pivotante par rapport au chariot autour d'un axe respectif sensiblement vertical et adaptés chacun à définir une position extrême correspondante de la lance, des moyens pour commander l'écartement des bras jusqu'à leur position déployée respective lors d'un déplacement du chariot dans le sens de projection, et le rapprochement des bras jusqu'à leur position rapprochée en l'absence de projection, des moyens élastiques étant interposés pour permettre un pivotement partiel de chacun des bras vers sa position rapprochée lorsqu'un bras vient en contact avec une roue du véhicule de façon à déplacer de façon correspondante la position extrême concernée.

Ainsi, lors du déplacement du chariot dans le sens de projection, ce sont les bras latéraux qui viennent respectivement en contact avec les roues correspondantes du véhicule. Lorsque les deux bras pivotent l'un vers l'autre au niveau des roues d'un même essieu, l'amplitude du pivotement de la lance se trouve automatiquement réduite sans aucun risque pour la lance de venir heurter les roues. Dans leur position rapprochée, en l'absence de projection, ces bras ne gênent en rien les déplacements du chariot et les déplacements d'un véhicule sur l'aire de lavage correspondante.

D'autres particularités et avantages de la présente invention apparaîtront dans la description détaillée ci-après.

Aux dessins annexés, donnés uniquement à titre d'exemples non limitatifs :
- la figure 1 est un schéma en perspective illustrant diverses positions du chariot et les positions respectivement déployée et rapprochée des bras sur ledit chariot ;
- la figure 2 est une vue de dessus illustrant un mode de réalisation du dispositif selon l'invention dans deux positions, respectivement à distance des roues et au niveau des roues d'un véhicule ;
- la figure 3 est une vue de dessus agrandie du mode de réalisation représenté à la figure 2 ;
- les figures 4A, 4B et 4C sont des vues partielles agrandies d'un détail de la figure 3 représentant respectivement la position rapprochée des bras, la position déployée des bras et la position partiellement rapprochée des bras au niveau des roues d'un véhicule ;
- les figures 5A, 5B et 5C sont des schémas illustrant le basculement au niveau d'un bras d'un mode de réalisation du support de lance.

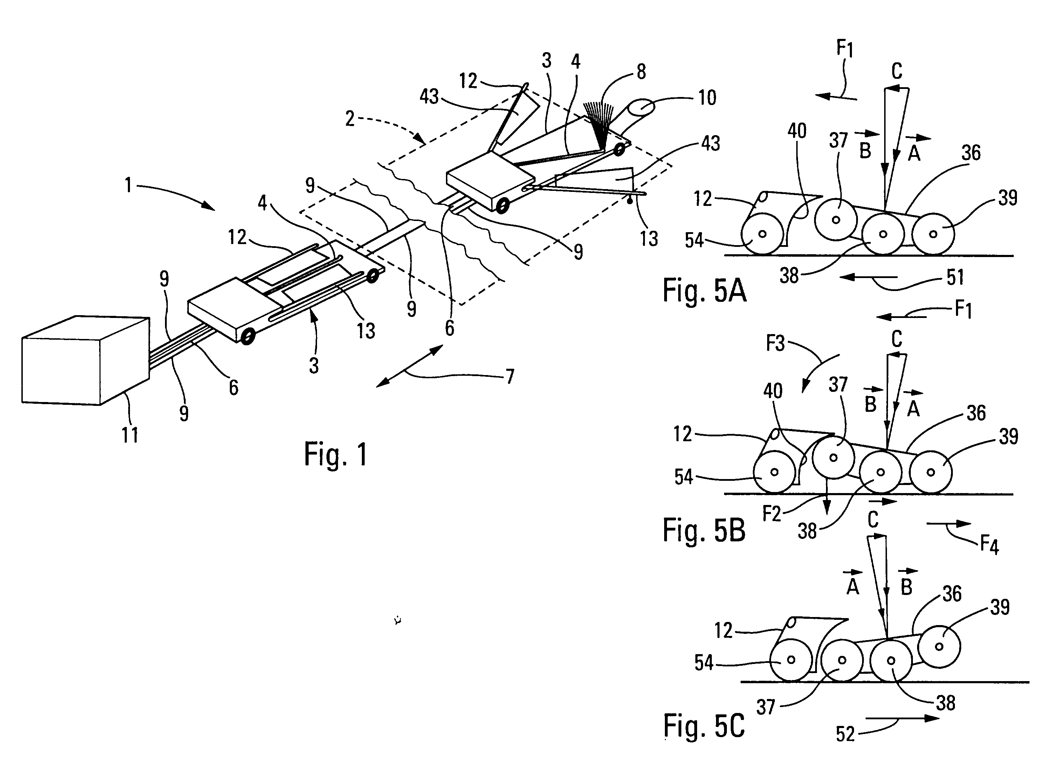

On a schématisé à la figure 1 un dispositif 1 selon la présente invention pour laver la face inférieure du châssis d'un véhicule schématisé en 2 par sa projection sur le sol d'une aire de lavage.

D'une façon classique, le dispositif 1 comprend un chariot 3 adapté à être déplacé sous le véhicule 2 et portant une lance de projection 4 montée à une de ses extrémités sur le chariot 3 de manière pivotante autour d'un axe 5 de pivotement sensiblement vertical.

La lance est adaptée à recevoir un liquide de lavage sous pression acheminé par un flexible 6.

Le dispositif 1 comprend des moyens pour déplacer le chariot 3 sensiblement dans la direction longitudinale 7 du véhicule 2; et des moyens portés par le chariot 3, pour faire pivoter la lance 4 alternativement dans les deux sens entre deux positions extrêmes de façon telle qu'un jet de liquide sous pression, schématisé en 8, balaie sensiblement toute ladite face inférieure dudit châssis.

Dans cet exemple, les moyens pour déplacer le chariot 3 sont schématisés sous la forme d'un traînage à câble 9 tournant autour d'une poulie 10 et actionné par un treuil schématisé en 11.

Suivant la présente invention, le chariot 3 porte deux bras latéraux 12, 13 montés chacun de manière pivotante par rapport au chariot 3 autour d'un axe respectif sensiblement vertical et adaptés chacun à définir une position extrême correspondante de la lance de projection 4.

Le chariot 3 comporte également des moyens pour commander l'écartement des bras 12, 13 jusqu'à leur position déployée respective lors d'un déplacement du chariot 3 dans le sens 14 de projection, et le rapprochement des bras 12, 13 jusqu'à leur position rapprochée en l'absence de projection.

Dans l'exemple représenté, et de façon classique, pour permettre la libre évolution des véhicules à nettoyer, le chariot 3 est dans sa position au repos à proximité du treuil 11. Lorsqu'un véhicule 2 est en place sur l'aire de lavage, le chariot est envoyé sous le véhicule 2 jusqu'à sa position éloignée à l'autre extrémité du véhicule, à proximité de la poulie 10. Le lavage peut alors commencer : on écarte les bras 12, 13, on alimente la lance 4 en liquide de lavage sous pression pour former le jet 8 de liquide sous pression. On déplace le chariot 3 dans le sens 14 de projection en direction du treuil 11 et on fait pivoter la lance de projection 4 alternativement dans les deux sens autour de son axe de pivotement 5 entre les deux bras 12 et 13.

Comme on le verra plus loin, des moyens élastiques sont interposés entre les bras 12, 13 et les moyens pour commander l'écartement desdits bras, pour permettre un pivotement partiel de chacun des bras 12, 13 vers sa position rapprochée lorsqu'un bras 12, 13 vient en contact avec une roue 15 du véhicule 2 de façon à déplacer de manière correspondante la position extrême concernée de la lance 4.

Chacun des bras latéraux 12, 13, d'une part, et la lance 4, d'autre part, comprennent des moyens respectifs complémentaires l'un de l'autre adaptés à provoquer l'inversion du sens de pivotement de la lance 4 lorsque la lance 4 arrive au contact de l'un quelconque desdits bras 12, 13.

Chacun des deux bras 12, 13 a de préférence une longueur sensiblement égale à celle de la lance de projection 4 de manière à protéger la lance 4 contre tout risque de choc contre un obstacle, notamment contre une roue 15.

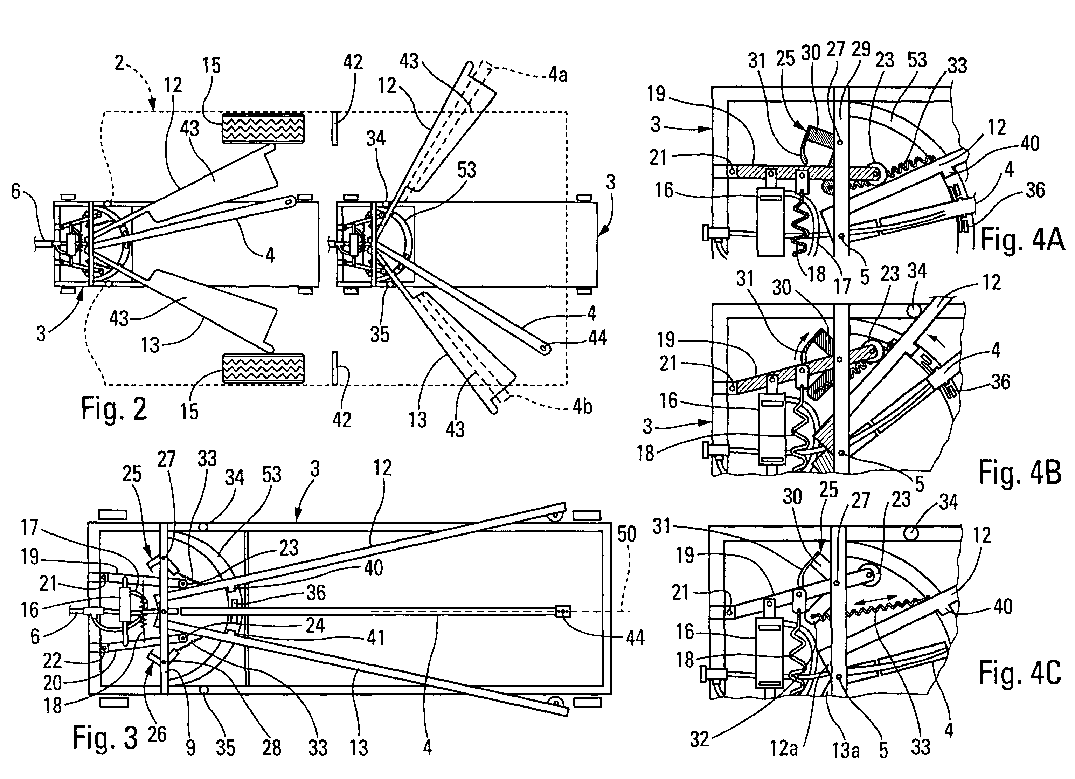

Dans le mode de réalisation représenté aux figures 2, 3 et 4A à 4C, la lance 4 est montée de façon telle par rapport au bras 12, 13, que, dans chacune de ses positions extrêmes, elle est sensiblement en contact, sur toute sa longueur, avec le bras 12, 13 correspondant.

Le cas échéant, et comme dans l'exemple représenté, la lance 4 a un axe de pivotement 5 sensiblement confondu avec celui de chacun des deux bras 12, 13.

Dans cet exemple et comme représenté en détail aux figures 4A à 4C, chaque bras 12, 13 a en vue en plan sensiblement une forme en L, l'axe de pivotement 5 traversant la petite branche 12a, 13a du L dont la grande branche constitue le bras 12, 13 proprement dit.

Ainsi, chaque bras 12, 13 est légèrement décalé radialement par rapport à la lance 4 qui est ainsi, dans chacune de ses positions extrêmes 4a, 4b, schématisées à la figure 2, sensiblement parallèle sur toute sa longueur au bras 12, 13 correspondant.

Dans le mode de réalisation représenté aux figures 2, 3 et 4A à 4C, les moyens pour commander l'écartement et le rapprochement des bras 12, 13 comprennent un vérin 16 qui est actionné par la pression du liquide sous pression arrivant par la dérivation 17, et qui agit, contre l'effet d'un ressort de rappel 18, sur deux biellettes 19 et 20 qui sont articulées à leur extrémité côté treuil 11, en 21, 22 au chariot 3, et qui portent à leur autre extrémité, un galet respectif 23, 24 qui vient coulisser le long du bord extérieur du bras 12, 13 correspondant.

Dans la position au repos, le ressort 18 rappelle les deux biellettes 19, 20 l'une vers l'autre, et les galets 23, 24 maintiennent respectivement les bras 12, 13 dans leur position rapprochée, comme schématisé à la figure 4A.

Les moyens de commande des bras 12, 13 comportent en outre deux équerres 25, 26 montées de manière pivotante autour d'un axe respectif 27, 28 sensiblement vertical porté par une traverse 29 du chariot 3 qui porte également, dans cet exemple, l'axe 5 de pivotement de la lance 4 et des bras 12, 13.

Chaque équerre 25, 26 comprend une première branche 30 portant à son extrémité un palpeur 31 qui vient en contact avec la biellette 19, 20 correspondante.

Chaque équerre 25, 26 comprend également une seconde branche 32 dont l'extrémité libre est reliée à un ressort 33 dont l'autre extrémité est fixée au bras 12, 13 correspondant.

Quand on alimente le vérin 16 en liquide de lavage sous pression, le vérin 16 se déploie et écarte les deux biellettes 19, 20 l'une de l'autre contre l'action du ressort 18. Chaque biellette 19, 20 vient en contact avec le palpeur 31 de l'équerre 25, 26 correspondante et fait pivoter cette équerre de façon telle que le ressort 33 exerce une traction pour amener le bras 12, 13 en contact avec le galet 23, 24 de la biellette 19, 20.

Chaque bras 12, 13 est ainsi maintenu dans sa position déployée, en appui contre une butée 34, 35 correspondante portée par le chariot 3.

Cette position déployée, représentée à la figure 4B, est également représentée dans la partie droite de la figure 2 et correspond à la position normale de fonctionnement du chariot 3.

Lorsque le chariot 3, en déplacement dans le sens 14 vers le treuil 11, arrive au niveau d'un essieu, non représenté, du véhicule schématisé en 2, chaque bras 12, 13 vient en contact avec une roue 15 correspondante qui repousse ledit bras 12, 13 pour l'obliger à un pivotement partiel vers sa position rapprochée.

La biellette 19, 20 correspondante ne s'oppose pas à un tel pivotement puisque le galet 23, 24 est en contact avec le bord extérieur du bras 12, 13. Ce bras 12, 13 peut ainsi pivoter librement contre l'action du ressort 33 qui maintient le bras 12, 13 contre la roue 15 et le rappellera dans sa position déployée dès que ce bras aura dépassé la roue 15 correspondante.

Dans le mode de réalisation représenté, la lance 4 pivote sous l'effet de la pression du liquide.

Comme schématisé aux figures 5A à 5C, la lance 4 est montée de façon à pouvoir tourner sur elle-même sensiblement autour de son axe longitudinal 50 entre deux positions stables représentées respectivement aux figures 5A et 5C, dans chacune desquelles la force de réaction exercée sur la lance 4 par le jet du liquide sous pression, représentée par le vecteur A selon l'axe de la buse de projection 44, fait un angle prédéterminé a avec la verticale, schématisée par le vecteur B.

Ainsi, on peut décomposer, dans chacune des deux positions stables de la lance 4, le vecteur A suivant un vecteur vertical B et une composante horizontale C qui peut être prédéterminée de façon telle qu'elle suffit à exercer à l'extrémité libre de la lance 4 une force de même sens obligeant celle-ci à pivoter autour de son axe de pivotement 5.

Le dispositif 1 comporte en outre des moyens pour faire tourner la lance 4 sur elle-même sensiblement autour de son axe longitudinal 50 d'une première position stable vers son autre position stable lorsque la lance 4 arrive en butée contre chacun des bras 12, 13.

Comme schématisé aux figures 5A, 5C, la lance 4 est montée sur un support mobile 36 adapté à basculer entre deux positions, schématisées respectivement aux figures 5A et 5C, correspondant aux deux positions stables de la lance 4.

Ce support 36 et chacun des bras 12, 13 comportent des conformations respectives complémentaires adaptées à faire basculer le support 36 lorsque celui-ci est pressé contre le bras 12, 13 correspondant sous l'effet de la composante C précitée.

Dans l'exemple représenté, le support 36 comporte trois galets 37, 38, 39 disposés à la suite l'un de l'autre de façon telle que le support 36 repose, dans chacune de ses positions stables, sur le galet central 38 et sur l'un respectif des deux galets latéraux 37, 39. L'angle de basculement du support 36 est égal à 2a.

En outre, chaque bras 12, 13 comporte une surface de came respective 40, 41 orientée de manière telle qu'elle force le support 36 à basculer lorsque le galet latéral 37, 39 correspondant vient en contact avec ladite surface 40, 41.

Dans l'exemple de la figure 5A, le vecteur C est dirigé vers la gauche, et cette composante exerce une force de réaction F₁ de même sens déplaçant le support 36 dans le sens 51 vers la gauche de la figure.

Dans la position de la figure 5B, le galet 37 est pressé par la force F₁ contre la surface de came 40 du bras 12. Cette surface 40 est orientée de façon à exercer sur le galet 37 une force F₂ dirigée vers le bas qui oblige le support 36 à basculer dans le sens F₃.

Le support 36 se retrouve dans la position de la figure 5C dans laquelle la composante C est dirigée vers la droite et exerce une force de réaction F₄ de même sens entraînant le support 36 dans le sens 52 vers la droite de la figure.

Dans cet exemple, les galets 37, 38, 39 roulent dans une glissière 53 de forme circulaire portée par le chariot 3 et ayant son centre sur l'axe de pivotement 5.

Avantageusement, chaque bras 12, 13 comporte un galet 54 adapté à rouler dans ladite glissière 53.

Comme schématisé à la figure 2, chaque bras 12, 13 comporte des moyens pour soulever la bavette souple 42 disposée en arrière de chacune des roues 15 d'un véhicule.

Dans cet exemple, chaque bras 12, 13 comporte, au moins près de son extrémité libre, un élément sensiblement horizontal 43 adapté à soulever ladite bavette 42, s'étendant vers l'autre bras 13, 12 et situé au-dessus du niveau de la lance 4 dont l'extrémité libre portant la buse de projection 44 s'étend radialement au-delà dudit élément 43.

La lance 4 passe ainsi sous cet élément 43 et ne risque pas d'être endommagée par un choc ou un contact avec la roue 15 ou la bavette 42.

L'élément 43 est par exemple un élément en tôle ou en treillis métallique ayant une résistance suffisante pour soulever la bavette 42.

On a ainsi décrit un dispositif extrêmement simple, robuste et fiable qui est capable, du fait du basculement du support 36 au contact de chaque bras 12, 13 qui modifie l'orientation du jet 8 de liquide sous pression, d'assurer un lavage extrêmement efficace du dessous d'un véhicule.

Bien entendu, la présente invention n'est pas limitée aux modes de réalisations que l'on vient de décrire, et on peut effectuer sur ceux-ci de nombreux changements et modifications sans sortir du domaine de l'invention.

On peut en particulier modifier tous les moyens de commande décrits ci-dessus par des moyens équivalents remplissant la même fonction pour obtenir le même résultat.

## Revendications

1. Dispositif (1) pour laver la face inférieure d'un châssis d'un véhicule (2), ce dispositif (1) comprenant un chariot (3) adapté à être déplacé sous le véhicule (2) et portant une lance (4) de projection montée à une de ses extrémités sur le chariot (3) de manière pivotante autour d'un axe (5) sensiblement vertical et recevant un liquide sous pression, des moyens (11) pour déplacer le chariot (3) sensiblement dans la direction longitudinale (7) du véhicule (2), des moyens pour faire pivoter la lance (4) alternativement dans les deux sens entre deux positions extrêmes de façon telle qu'un jet (8) de liquide sous pression balaie sensiblement toute ladite face inférieure dudit châssis, caractérisé en ce que le chariot (3) porte deux bras latéraux (12, 13) montés chacun de manière pivotante par rapport au chariot (3) autour d'un axe respectif sensiblement vertical et adaptés chacun à définir une position extrême correspondante de la lance (4), des moyens (16, 18) pour commander l'écartement des bras (12, 13) jusqu'à leur position déployée respective lors d'un déplacement du chariot (3) dans le sens (14) de projection, et le rapprochement des bras (12, 13) jusqu'à leur position rapprochée en l'absence de projection, des moyens élastiques (33) étant interposés pour permettre un pivotement partiel de chacun des bras (12, 13) vers sa position rapprochée lorsqu'un bras (12, 13) vient en contact avec une roue (15) du véhicule (2) de façon à déplacer de manière correspondante la position extrême concernée.

2. Dispositif selon la revendication 1, caractérisé en ce que chacun des bras latéraux (12, 13), d'une part, et la lance (4), d'autre part, comprennent des moyens respectifs complémentaires l'un de l'autre adaptés à provoquer l'inversion du sens de pivotement de la lance (4) lorsque la lance (4) arrive au contact de l'un quelconque desdits bras (12, 13).

3. Dispositif selon la revendication 1 ou 2, caractérisé en ce que chacun des deux bras (12, 13) a une longueur sensiblement égale à celle de la lance (4).

4. Dispositif selon l'une quelconque des revendications précédentes, caractérisé en ce que la lance (4) est montée de façon telle par rapport aux bras (12, 13) que, dans chacune de ses positions extrêmes, elle est sensiblement en contact sur toute sa longueur avec le bras (12, 13) correspondant, et en ce que, le cas échéant, la lance (4) a un axe de pivotement (5) sensiblement confondu avec celui de chacun des deux bras, chaque bras (12, 12) ayant par exemple sensiblement une forme en L, l'axe de pivotement (5) traversant la petite branche (12a, 13a) du L.

5. Dispositif selon l'une quelconque des revendications précédentes, caractérisé en ce que la lance (4) pivote sous l'effet de la pression du liquide.

6. Dispositif selon la revendication 5, caractérisé en ce que la lance (4) est montée de façon à pouvoir tourner sur elle-même sensiblement autour de son axe longitudinal (50) entre deux positions stables dans chacune desquelles la force de réaction (A) exercée sur la lance par le jet du liquide sous pression fait un angle prédéterminé (a) avec la verticale (B), et en ce que le dispositif (1) comporte des moyens pour faire tourner la lance (4) vers son autre position stable lorsque la lance (4) arrive en butée contre chacun des bras (12, 13).

7. Dispositif selon la revendication 6, caractérisé en ce que la lance (4) est montée sur un support (36) adapté à basculer entre deux positions correspondant aux deux positions stables de la lance (4), et en ce que ledit support (36) et chacun des bras (12, 13) comportent des conformations respectives complémentaires adaptées à faire basculer le support (36) lorsque celui-ci est pressé contre le bras (12, 13) correspondant.

8. Dispositif selon la revendication 7, caractérisé en ce que le support (36) comporte trois galets (37, 38, 39) disposés à la suite l'un de l'autre de façon telle que le support (36) repose dans chacune de ses positions sur le galet central (38) et sur l'un respectif des deux galets latéraux (37, 39).

9. Dispositif selon la revendication 8, caractérisé en ce que chaque bras (12, 13) comporte une surface de came (40, 41) orientée de manière telle qu'elle force le support (36) à basculer lorsque le galet latéral (37, 39) correspondant vient en contact avec ladite surface (40, 41).

10. Dispositif selon l'une quelconque des revendications précédentes, caractérisé en ce que chaque bras (12, 13) comporte des moyens (43) pour soulever la bavette souple (42) disposée en arrière de chacune des roues (15) d'un véhicule (2) et, le cas échéant, en ce que chaque bras (12, 13) comporte, au moins près de son extrémité, un élément (43) sensiblement horizontal adapté à soulever ladite bavette (42), s'étendant vers l'autre bras (13, 12) et situé au-dessus du niveau de la lance (4) dont l'extrémité libre portant la buse de projection (44) s'étend radialement au-delà dudit élément (43).
